# EUROPÄISCHE PATENTSCHRIFT

(11) **EP 1 269 121 B1**
(45) Veröffentlichungstag und Bekanntmachung des Hinweises auf die Patenterteilung: **17.08.2011**
(21) Anmeldenummer: 02712728.1
(22) Anmeldetag: 01.02.2002
(51) Int. Cl.: G01D 5/14, G01D 5/16

(54) **MESSVORRICHTUNG ZUR BERÜHRUNGSLOSEN ERFASSUNG EINES DREHWINKELS**
MEASURING DEVICE FOR THE CONTACTLESS DETECTION OF AN ANGLE OF ROTATION
DISPOSITIF DE MESURE POUR DETERMINER SANS CONTACT UN ANGLE DE ROTATION

(30) Priorität: 03.02.2001 DE 10104872
(43) Veröffentlichungstag der Anmeldung: 02.01.2003
(73) Patentinhaber: ROBERT BOSCH GMBH, 70442 Stuttgart (DE)
(72) Erfinder: KLOTZBUECHER, Thomas, 70635 Rudersberg (DE); BAUER, Bernhard, 71554 Weissach (DE)
(86) Internationale Anmeldenummer: PCT/DE2002/000362
(87) Internationale Veröffentlichungsnummer: WO 2002/063245

(56) Entgegenhaltungen:
- EP-A- 0 891 914
- DE-A- 10 008 540
- DE-A- 19 701 069
- DE-A- 19 701 637

## Beschreibung

Die vorliegende Erfindung betrifft eine Messvorrichtung zur berührungslosen Erfassung eines Drehwinkels, insbesondere zur Erfassung eines Drehwinkels einer Pedalanordnung.

Insbesondere auf dem Fahrzeugsektor finden in jüngerer Zeit immer mehr elektronische Systeme wie z.B. Antiblockiersysteme, Antischlupfregelungen oder elektronische Bremssysteme Anwendung. Hierbei ist es notwendig, die Stellung eines Bremspedals und/oder eines Gaspedals möglichst genau zu erfassen, um entsprechende Signale an eine Steuereinrichtung des elektronischen Systems geben zu können. Hierbei wurde schon vorgeschlagen, Messvorrichtungen am Fusshebelwerk des Pedals anzubringen, was jedoch zu ungünstigen Einbaugeometrien im Pedalbereich führt. Neben der Raumproblematik bei Pedalanordnungen soll ein Winkelgeber für ein Pedal insbesondere in einem winkel zwischen 10° und 25° möglichst genaue Signale liefern.

Aus der DE 199 17 939.5 ist eine Messvorrichtung zur berührungslosen Erfassung eines Drehwinkels bekannt, bei der eine aus magnetisch nicht leitendem Material bestehende Trägerplatte als Rotor dient. Auf der Trägerplatte ist ein Permanentmagnet angeordnet, welcher planar ausgebildet ist und dessen Polarisationsrichtung diametral zu einer Achse des Rotors ist. Ein Hall-Element ist asymmetrisch angeordnet, so dass eine elliptische Drehbewegung des Hall-Elements relativ zum Permanentmagneten erfolgt. Dadurch ergibt sich in der Kurve des Ausgangssignals ein steil abfallender und ein flacher Bereich. Zwar kommt diese Messvorrichtung ohne Magnetflussstücke aus, durch die Verwendung des Rotors ist sie jedoch nur bedingt für einen Einsatz in einer Pedalanordnung geeignet. Weiterhin weist diese Messvorrichtung bewegliche Teile auf, welche einem Verschleiß unterliegen können.

Die Offenlegungsschrift DE 197 01 637 A1 zeigt eine Pedaleinrichtung mit einem schwenkbaren Pedalkörper. Die Pedaleinrichtung weist eine einem Widerstandsnetzwerk zugeordnete Kontaktstruktur auf, die unter Einwirkung einer durch den Pedalkörper bewegbaren Magneteinrichtung in der Art auslenkbar ist, dass eine von der Position des Pedalkörpers abhängige elektrische Verbindung bewirkt wird.

Die DE 197 01 069 A1 zeigt eine Vorrichtung zur Messung eines Bremspedalwegs. Die Vorrichtung hat einen stabförmigen Permanentmagneten, dessen Länge wesentlich größer als der maximale Verschiebeweg einer Schubstange der Vorrichtung ist, wobei der Magnet an der Schubstange befestigt ist und dem mindestens einen Magnetstab ein magnetoresistives Element zugeordnet ist, das in geringem Querabstand vom Magnetstab räumlich feststehend angeordnet ist.

Der in der EP 0 891914 A2 gezeigte Lenkungssensoreinheit hat ein Magnetrad und mehrere Pole, in entgegengesetzter Polarität einheitlich verteilt in abwechselnder Weise, wobei die Hall-Effekt-Erfassungsvorrichtung einen Hauptkörper umfasst und der Hauptkörper benachbarte Hall-Effekt-Sensorelemente an der Vorderfläche und eine erste Anlagefläche in einem vorgegebenen Abstand von dem Hall-Effekt-Sensorelement aufweist und im Betrieb an eine zweite Anlagefläche anliegend angeordnet ist, die in Bezug auf das Magnetrad festgelegt ist und wobei die Vorderfläche durch eine gekrümmte Außenfläche vorgegeben ist.

### Vorteile der Erfindung

Eine erfindungsgemäße Messvorrichtung zur berührungslosen Erfassung eines Drehwinkels an einer Pedalanordnung weist einen Magneten und ein magnetfeldempfindliches Element zur Erzeugung eines Messsignals auf. Dabei ist der Magnet am Pedal der Pedalanordnung angeordnet und das magnetfeldempfindliche Element ist ortsfest an einem Lagerbock der Pedalanordnung angeordnet. Hierbei ist in der Ausgangsstellung des Pedals der Magnet derart zum magnetfeldempfindlichen Element angeordnet, dass das magnetfeldempfindliche Element keinen Magnetfluss (B=0) misst. Somit wird der Magnet bei Betätigung des Pedals um das am Lagerbock ortsfest angeordnete magnetfeldempfindliche Element bewegt, so dass abhängig von der Lage des Magneten (Pedalstellung) ein lineares Signal an ein Steuergerät weitergegeben wird. Durch diese Anordnung der Einzelteile der Messvorrichtung wird erfindungsgemäß nur ein sehr geringer Bauraum benötigt, so dass die erfindungsgemäße Messvorrichtung problemlos im Pedalbereich eingebaut werden kann. Dadurch ist auch eine Verwendung der Messvorrichtung sowohl bei hängenden Pedalen als auch bei stehenden Pedalen, welche am Drehpunkt einen besonders kleinen Bauraum aufweisen, möglich. Weiter kann erfindungsgemäß als Magnet ein einfacher, kleiner Standard-Flachmagnet verwendet werden. Dadurch kann die erfindungsgemäße Messvorrichtung besonders kostengünstig realisiert werden, insbesondere da keine weiteren Bauteile wie Magnetflussstücke o.ä. notwendig sind. Weiterhin weist die erfindungsgemäße Messvorrichtung keine beweglichen Teile auf, da der Magnet zusammen mit dem Pedal gedreht wird und somit über die Lagerung des Pedals drehbar gelagert ist. Dadurch kann ein Verschleiss der Messvorrichtung praktisch verhindert werden.

Gemäß einer bevorzugten Ausgestaltung der vorliegenden Erfindung ist das magnetfeldempfindliche Element in einer am Lagerbock vorgesehenen taschenförmigen Aufnahme angeordnet. Dadurch muss für die Messvorrichtung kein separates Gehäuse vorgesehen werden. Somit kann die erfindungsgemäße Messvorrichtung einfach ausgestaltet werden und weist nur eine geringe Anzahl von Einzelteilen auf.

Vorzugsweise ist das magnetfeldempfindliche Element direkt auf einer Platine oder einem Stanzgitter oder MID angeordnet. Dies ermöglicht eine besonders kompakte Messvorrichtung sowie eine einfache Verdrahtung und Kontaktierung.

Um eine Abdichtung des magnetfeldempfindlichen Elements am Lagerbock zu ermöglichen, weist die erfindungsgemäße Messvorrichtung einen Träger zum Verschließen der taschenförmigen Aufnahme auf. Dabei ist das magnetfeldempfindliche Element vorzugsweise unmittelbar am Träger angeordnet. Dadurch kann insbesondere die Montage vereinfacht werden, da das magnetfeldempfindliche Element an dem Träger vormontiert werden kann und dann samt dem Träger in die taschenförmige Aufnahme des Lagerbocks eingeschoben werden kann. Der Träger ermöglicht eine einfache und sichere Abdichtung der taschenförmigen Aufnahme. Dadurch kann der Sensor offen gestaltet sein, wodurch die Anzahl der notwendigen Einzelteile minimiert werden kann. Somit ist die Messvorrichtung vollständig gegenüber allen beweglichen Teilen abgekapselt. Dadurch ergibt sich ein geringer Einfluss gegenüber einem Kippen des Pedals im Lagerbereich. Am Pedal auftretende Querkräfte haben auf die Messvorrichtung dadurch überhaupt keinen Einfluss.

Gemäß einer weiteren bevorzugten Ausgestaltung der vorliegenden Erfindung ist der Träger an der Aussenseite als Steckaufnahme ausgebildet, so dass an den Träger unmittelbar ein Stecker angebracht werden kann.

Vorzugsweise ist der Träger ultraschallverschweißt oder eingeclipst oder eingenietet.

Besonders bevorzugt wird das magnetfeldempfindliche Element in seiner Endmontageposition mittels eines Federelements in einer definierten Lage gehalten. Beispielsweise kann das Federelement in der taschenförmigen Aufnahme des Lagerbocks integriert sein oder am Ende an der Platine angebracht sein. Dadurch kann das magnetfeldempfindliche Element über seine Lebensdauer in der vordefinierten Position gehalten werden und seine Lage nur in unkritische Bereiche verändern.

Gemäß einem anderen bevorzugten Ausführungsbeispiel ist der Magnet in einer Rückstellfeder des Pedals angeordnet, wobei die Rückstellfeder aus einem magnetisch nicht leitenden Material hergestellt ist. Dadurch ist die Rückstellung des Sensors z.B. bei einem Pedalbruch immer gewährleistet, so dass auch bei einem Totalausfall keine falschen Signale an die Steuereinheit abgegeben werden.

Eine besonders kompakte Messvorrichtung ergibt sich, wenn das Pedal an zwei unabhängigen Lagerstellen am Lagerbock gelagert ist und die Messvorrichtung zwischen den beiden Lagerstellen angeordnet ist. Insbesondere kann dadurch auch eine genaue Führung des am Pedal befestigten Magneten sichergestellt werden. Das Pedal kann beispielsweise mittels zweier Lagerbuchsen, welche an zwei gegenüberliegenden Seiten des Pedals angeordnet sind und mittels zweier Lagerbolzen am Lagerbock drehbar befestigt werden, wodurch die Lagerstellen unabhängig voneinander sind.

Bevorzugterweise wird der Magnet erst nach der vollständigen Montage der Pedalanordnung und des magnetfeldempfindlichen Elements am Pedal positioniert und eingestellt. Dadurch kann der Winkelsensor auf einfache Weise so eingestellt werden, dass das magnetfeldempfindliche Element keinen Magnetfluss (B=0) misst. Die Einstellung bzw. Positionierung des Magneten erfolgt dabei vorzugsweise mittels Ultraschallschweißen, einem Einrammen des Magneten oder einem Eindrücken bzw. Einclipsen des Magneten in entsprechend geformte Ausnehmungen bzw. Aufnahmen. Vorteilhafterweise kann die Einstellung mittels einer linearen Bewegung erfolgen. Durch die erfindungsgemäße Integration der taschenförmigen Aufnahme für das magnetfeldempfindliche Element am Lagerbock der Pedalanordnung ist die Gestaltung der erfindungsgemäßen Messvorrichtung offen für eine Vielzahl von Fertigungs- und Prozessverfahren wie z.B. MID, Stanzgitter oder dem Anbringen des magnetfeldempfindlichen Elements an einer Platine. Weiterhin kann die erfindungsgemäße Messvorrichtung aufgrund ihrer Baugröße sowohl für hängende als auch für stehende Pedale verwendet werden und kann als Pedal mit integriertem und mit externem Sensor aufgebaut sein. Da erfindungsgemäß ein einfacher und kostengünstiger Standard-Flachmagnet verwendet werden kann, kann auch eine Einstellung der erfindungsgemäßen Messvorrichtung in der Normalposition des Pedals (Position bei einem Nichtbetätigen des Pedals) einfach erreicht werden, indem der Magnet rechtwinklig zum magnetfeldempfindlichen Element und mittig auf Höhe der Sensitivfläche des magnetfeldempfindlichen Elements angeordnet wird. Dadurch misst das magnetfeldempfindliche Element in der Normalstellung keinen Magnetfluss (B=0). Da für eine Anwendung der Messvorrichtung an Pedalanordnungen die Toleranzen im Normalzustand sehr gering sind, ist es wichtig, dass die Messvorrichtung im Normalzustand keinen Magnetfluss misst, um diese Toleranz auch über eine sich ändernde Temperatur einzuhalten. Erfindungsgemäß wird somit eine Messvorrichtung bereitgestellt, welche vollständig in einer Pedalanordnung integriert ist und selbst keine eigenen Verschleissteile aufweist.

### Zeichnung

Ein Ausführungsbeispiel der Erfindung ist in der Zeichnung dargestellt und wird in der nachfolgenden Beschreibung näher erläutert.

In der einzigen Figur ist eine Explosionsdarstellung einer erfindungsgemäßen Messvorrichtung gemäß einem Ausführungsbeispiel der vorliegenden Erfindung dargestellt.

### Beschreibung des Ausführungsbeispiels

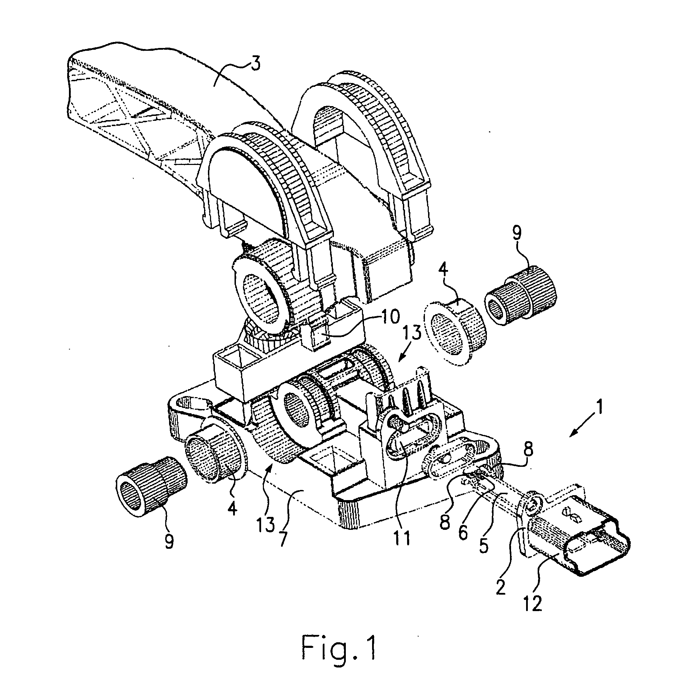

Die in der Figur 1 dargestellte erfindungsgemäße Messvorrichtung wird in einer Pedalanordnung verwendet, welche aus einem Pedal 3 sowie einem Lagerbock 7 besteht. Am Pedal 3 ist ein Magnet 10 befestigt. Ein magnetfeldempfindliches Element 6 zur Erzeugung eines Messsignals ist am Lagerbock befestigt. Der Sensor besteht somit aus dem Magneten 10 sowie dem magnetfeldempfindlichen Element 6. Als magnetfeldempfindliches Element können beispielsweise eine Feldplatte, Magnettransistoren, magnetoresistive Elemente oder ein Hall-Element verwendet werden. Wichtig ist hierbei, dass das magnetfeldempfindliche Bauteil eine möglichst lineare Abhängigkeit seines Ausgangssignals von der magnetischen Induktion B sowie eine Abhängigkeit des Einfallswinkels des Magnetflusses aufweist.

In der Ausgangsstellung der Pedalanordnung (d.h. bei Nichtbetätigung des Pedals) ist der Magnet 10 zum magnetfeldempfindlichen Element 6 derart angeordnet, dass dieses keinen Magnetfluss, d.h. B=0, misst.

Wie in Figur 1 gezeigt, ist das magnetfeldempfindliche Element auf einer Platine 5 befestigt. Die längliche Platine 5 ist ihrerseits an einem Träger 2 befestigt, welcher eine Steckaufnahme 12 an seiner Aussenseite aufweist. Weiter ist am Lagerbock 7 eine taschenförmige Aufnahme 11 gebildet, welche zur Aufnahme des magnetfeldempfindlichen Elements samt Platine 5 dient. Beispielsweise kann der Lagerbock 7 aus einem Kunststoff gespritzt werden, so dass die taschenförmige Aufnahme 11 als integraler Bestandteil des Lagerbocks gespritzt werden kann. Hierdurch kann die erfindungsgemäße Messvorrichtung offen gestaltet sein, da eine Abdichtung des magnetfeldempfindlichen Elements 6 durch den Träger 2 erfolgt. Weiterhin werden dadurch eine Vielzahl von Gestaltungsvarianten sowie Montagevarianten der Messvorrichtung ermöglicht, wie z.B. eine Ausgestaltung als Stanzgitter, MID oder Platine. Weiterhin ermöglicht die erfindungsgemäße Ausgestaltung vielfältige Kontaktierungsmöglichkeiten zwischen dem Stecker und der Platine bzw. eine einfache Anpassung der Steckaufnahme 12 an unterschiedliche Steckverbindungen verschiedener Kraftfahrzeughersteller.

Wie weiter in Figur 1 ersichtlich ist, sind seitlich am magnetfeldempfindlichen Element 6 Federelemente 8 ausgebildet, um das magnetfeldempfindliche Element 6 im montierten Zustand in eine im Voraus definierte Lage zu positionieren. Dadurch wird das magnetfeldempfindliche Element über seine Lebensdauer sicher in einer vordefinierten Position gehalten.

Wie in Figur 1 gezeigt, sind am Lagerbock 7 zwei Lagerstellen 13 ausgebildet. Die Lagerstellen 13 dienen zur Aufnahme von jeweils einer Lagerbuchse 4. Zur Montage wird das Pedal 3 mit vormontierten Lagerbuchsen 4 auf den Lagerbock 7 gesetzt und anschließend wird von beiden Seiten jeweils ein Lagerbolzen 9 eingedrückt. Dadurch ist das Pedal 7 um die durch die Lagerbolzen 9 gebildete Achse schwenkbar. Als letzter Arbeitsschritt bei der Montage der Pedalanordnung wird der Magnet 10 am Pedal 3 angebracht. Dabei wird der Magnet 10 derart angebracht, dass das magnetfeldempfindliche Element 6 in der Ausgangsstellung keinen Magnetfluss (B=0) misst. Hierzu wird der Magnet 10 rechtwinklig zum magnetfeldempfindlichen Element 6 z.B. eingedrückt, eingeschweisst, eingerammt, oder eingeclipst. Dadurch ist Magnet 10 derart angeordnet, dass die Magnetfeldlinien beispielsweise bei Verwendung eines Hall-Elements als magnetfeldempfindlichem Element keine Hall-Spannung (B=0) erzeugen. Dies ist der Fall, wenn der Magnet 10 rechtwinklig zum Hall-Element und mittig auf Höhe der sensitiven Fläche des Hall-Elements angeordnet ist.

Wenn nun das Pedal 3 durch den Fahrer betätigt wird, schwenkt das Pedal 3 um die Lagerbolzen 9. Dadurch schwenkt auch der Magnet 10 um das ortsfest angeordnete magnetfeldempfindliche Element 6. Dadurch ändert sich auch die magnetische Induktion B im magnetfeldempfindlichen Element 6, wobei aus der Änderung der magnetischen Induktion B auf den Verdrehwinkel des Pedals 3 geschlossen werden kann und ein entsprechendes Signal an eine Steuereinrichtung abgegeben werden kann.

Erfindungsgemäß wird somit eine Messvorrichtung zur berührungslosen Erfassung eines Drehwinkels an einer Pedalanordnung bestehend aus einem Pedal 3 und einem Lagerbock 7 bereitgestellt, welche einen Magneten 10 und ein magnetfeldempfindliches Element 6 zur Erzeugung eines Messsignals aufweist. Dabei ist der Magnet 10 am Pedal 3 angeordnet und das magnetfeldempfindliche Element 6 ist ortsfest am Lagerbock 7 angeordnet. In einer Ausgangsstellung des Pedals 3 ist der Magnet 10 derart zum magnetfeldempfindlichen Element 6 angeordnet, dass das magnetfeldempfindliche Element 6 keinen Magnetfluss misst. Dadurch kann eine kompakte Messvorrichtung 1 erhalten werden, welche einen minimalen Bauraum benötigt. Weiterhin wird nur eine minimale Anzahl von Einzelteilen verwendet, da das magnetfeldempfindliche Element 6 bzw. der Magnet 10 jeweils im Pedal 3 bzw. im Lagerbock 7 der Pedalanordnung integriert sind. Da die Messvorrichtung 1 keine beweglichen Teile aufweist, kann eine lange Lebensdauer ohne Verschleiss gewährleistet werden.

Die vorhergehende Beschreibung des Ausführungsbeispiels gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

## Patentansprüche

1. Messvorrichtung (1) zur berührungslosen Erfassung eines Drehwinkels an einer Pedalanordnung, welche aus einem Pedal (3) und einem Lagerbock (7) besteht, umfassend einen Magneten (10) und ein magnetfeldempfindliches Element (6) zur Erzeugung eines Messsignals, **dadurch gekennzeichnet, dass** das Messsignal des magnetempfindlichen Elements (6) von einem Einfallswinkel des Magnetflusses des Magneten (10) abhängt, und der Magnet (10) am Pedal (3) angeordnet ist und das magnetfeldempfindliche Element (6) ortsfest am Lagerbock (7) angeordnet ist, wobei in einer Ausgangsstellung des Pedals (3) der Magnet (10) derart zum magnetfeldempfindlichen Element (6) angeordnet ist, dass das magnetfeldempfindliche Element (6) keinen Magnetfluss misst.

2. Messvorrichtung (1) nach Anspruch 1, **dadurch gekennzeichnet, dass** das magnetfeldempfindliche Element (6) in einer am Lagerbock (7) vorgesehenen taschenförmigen Aufnahme (11) angeordnet ist.

3. Messvorrichtung (1) nach Anspruch 1 oder 2, **dadurch gekennzeichnet, dass** das magnetfeldempfindliche Element (6) im Zentrum des Lagerbocks (7) abgekapselt von beweglichen Teilen angeordnet ist.

4. Messvorrichturig (1) nach einem der Ansprüche 1 bis 3, **dadurch gekennzeichnet, dass** das Pedal (3) an zwei unabhängigen Lagerstellen (13) am Lagerbock (7) gelagert ist und die Messvorrichtung (1) zwischen den beiden Lagerstellen (13) angeordnet ist.

5. Messvorrichtung (1) nach einem der Ansprüche 1 bis 4, **dadurch gekennzeichnet, dass** das magnetfeldempfindliche Element (6) auf einem Träger (2) zum Verschließen der taschenförmigen Aufnahme (11) angeordnet ist.

6. Messvorrichtung (1) nach Anspruch 5, **dadurch gekennzeichnet, dass** der Träger (2) als Steckaufnahme (12) ausgebildet ist.

7. Messvorrichtung (1) nach Anspruch 5 oder 6, **dadurch gekennzeichnet, dass** der Träger (2) ultraschallverschweißt, oder eingeclipst oder eingenietet ist.

8. Messvorrichtung (1) nach einem der Ansprüche 1 bis 7, **dadurch gekennzeichnet, dass** das magnetfeldempfindliche Element (6) in seiner Endmontageposition mittels eines Federelements (8) in einer definierten Lage gehalten wird.

9. Messvorrichtung (1) nach einem der Ansprüche 1 bis 8, **dadurch gekennzeichnet, dass** der Magnet (10) nach vollständiger Montage der Pedalanordnung positioniert und eingestellt wird.

10. Messvorrichtung (1) nach Anspruch 9, **dadurch gekennzeichnet, dass** die Einstellung mittels einer linearen Bewegung erfolgt.

11. Messvorrichtung (1) nach Anspruch 9, **dadurch gekennzeichnet, dass** die Positionierung des Magneten (10) mittels Ultraschallschweissen oder Einrammen oder Eindrücken oder Einclipsen erfolgt.

12. Messvorrichtung (1) nach einem der Ansprüche 1 bis 11, **dadurch gekennzeichnet, dass** der Magnet (10) in einer Rückstellfeder für das Pedal (3) angeordnet ist, wobei die Rückstellfeder aus einem magnetisch nicht leitenden Material hergestellt ist.

## Claims

1. Measuring device (1) for the contactless detection of an angle of rotation on a pedal arrangement which is composed of a pedal (3) and a bearing block (7), comprising a magnet (10) and a magnetic-field-sensitive element (6) for generating a measurement signal, **characterized in that** the measurement signal of the magnetsensitive element (6) depends on an angle of incidence of the magnetic flux of the magnet (10), and the magnet (10) is arranged on the pedal (3), and the magnetic-field-sensitive element (6) is arranged in a fixed fashion on the bearing block (7), wherein, in a helm position of the pedal (3), the magnet (10) is arranged with respect to the magnetic-field-sensitive element (6) in such a way that the magnetic-field-sensitive element (6) does not measure any magnetic flux.

2. Measuring device (1) according to Claim 1, **characterized in that** the magnetic-field-sensitive element (6) is arranged in a pocket-shaped receptacle (11) which is provided on the bearing block (7).

3. Measuring device (1) according to Claim 1 or 2, **characterized in that** the magnetic-field-sensitive element (6) is arranged encapsulated by moveable parts in the centre of the bearing block (7).

4. Measuring device (1) according to one of Claims 1 to 3, **characterized in that** the pedal (3) is mounted at two independent bearing points (13) on the bearing block (7), and the measuring device (1) is arranged between the two bearing points (13).

5. Measuring device (1) according to one of Claims 1 to 4, **characterized in that** the magnetic-field-sensitive element (6) is arranged on a carrier (2) for closing the pocket-shaped receptacle (11).

6. Measuring device (1) according to Claim 5, **characterized in that** the carrier (2) is embodied as a plug-on receptacle (12).

7. Measuring device (1) according to Claim 5 or 6, **characterized in that** the carrier (2) is ultra-sound welded or clipped in or riveted in.

8. Measuring device (1) according to one of Claims 1 to 7, **characterized in that** the magnetic-field-sensitive element (6) is held in a defined position in its end mounted position by means of a spring element (8).

9. Measuring device (1) according to one of Claims 1 to 8, **characterized in that** the magnet (10) is positioned and set after complete mounting of the pedal arrangement.

10. Measuring device (1) according to Claim 9, **characterized in that** the setting is carried out by means of a linear movement.

11. Measuring device (1) according to Claim 9, **characterized in that** the magnet (10) is positioned by means of ultra-sound welding or ramming in or pressing in or clipping in.

12. Measuring device (1) according to one of Claims 1 to 11, **characterized in that** the magnet (10) is arranged in a restoring spring for the pedal (3), wherein the restoring spring is manufactured from a magnetically nonconductive material.

## Revendications

1. Dispositif de mesure (1) pour détecter sans contact un angle de rotation sur un agencement de pédale, qui se compose d'une pédale (3) et d'un coussinet (7), comprenant un aimant (10) et un élément sensible aux champs magnétiques (6) pour produire un signal de mesure, **caractérisé en ce que** le signal de mesure de l'élément sensible aux champs magnétiques (6) dépend d'un angle d'incidence du flux magnétique de l'aimant (10), et l'aimant (10) est disposé sur la pédale (3), et l'élément sensible aux champs magnétiques (6) est disposé fixement sur le coussinet (7), et dans une position de départ de la pédale (3), l'aimant (10) étant disposé par rapport à l'élément sensible aux champs magnétiques (6) de telle sorte que l'élément sensible aux champs magnétiques (6) ne mesure aucun flux magnétique.

2. Dispositif de mesure (1) selon la revendication 1, **caractérisé en ce que** l'élément sensible aux champs magnétiques (6) est disposé dans un logement (11) en forme de poche prévu sur le coussinet (7).

3. Dispositif de mesure (1) selon la revendication 1 ou 2, **caractérisé en ce que** l'élément sensible aux champs magnétiques (6) est disposé au centre du coussinet (7) de manière encapsulée par rapport aux pièces mobiles.

4. Dispositif de mesure (1) selon l'une quelconque des revendications 1 à 3, **caractérisé en ce que** la pédale (3) est montée sur deux points de palier (13) indépendants sur le coussinet (7), et le dispositif de mesure (1) est disposé entre les deux points de palier (13).

5. Dispositif de mesure (1) selon l'une quelconque des revendications 1 à 4, **caractérisé en ce que** l'élément sensible aux champs magnétiques (6) est disposé sur un support (2) pour fermer le logement (11) en forme de poche.

6. Dispositif de mesure (1) selon la revendication 5, **caractérisé en ce que** le support (2) est réalisé sous forme de logement d'enfichage (12).

7. Dispositif de mesure (1) selon la revendication 5 ou 6, **caractérisé en ce que** le support (2) est soudé aux ultrasons, ou enclipsé, ou riveté.

8. Dispositif de mesure (1) selon l'une quelconque des revendications 1 à 7, **caractérisé en ce que** l'élément sensible aux champs magnétiques (6) est maintenu dans une position définie dans sa position de montage finale au moyen d'un élément de ressort (8).

9. Dispositif de mesure (1) selon l'une quelconque des revendications 1 à 8, **caractérisé en ce que** l'aimant (10) est positionné et ajusté après le montage complet de l'agencement de pédale.

10. Dispositif de mesure (1) selon la revendication 9, **caractérisé en ce que** l'ajustement a lieu au moyen d'un mouvement linéaire.

11. Dispositif de mesure (1) selon la revendication 9, **caractérisé en ce que** le positionnement de l'aimant (10) s'effectue au moyen d'un soudage par ultrasons ou d'un enfoncement ou d'un pressage ou d'un enclipsage.

12. Dispositif de mesure (1) selon l'une quelconque des revendications 1 à 11, **caractérisé en ce que** l'aimant (10) est disposé dans un ressort de rappel pour la pédale (3), le ressort de rappel étant fabriqué en un matériau magnétiquement non conducteur.
